# EUROPÄISCHE PATENTSCHRIFT

(11) **EP 0 464 486 B1**
(45) Veröffentlichungstag und Bekanntmachung des Hinweises auf die Patenterteilung: **22.02.1995**
(21) Anmeldenummer: 91110140.0
(22) Anmeldetag: 20.06.1991
(51) Int. Cl.: G03B 42/04

(54) **Vorratsmagazin für in einer lichtdichten Umhüllung befindliche Röntgenblattfilmstapel**
Storage magazine for a stack of X-ray sheet films in a light-proof envelope
Réservoir de stockage pour une pile de pellicules radiographiques en feuilles se trouvant dans une enveloppe étanche à la lumière

(30) Priorität: 03.07.1990 DE 4021111
(43) Veröffentlichungstag der Anmeldung: 08.01.1992
(73) Patentinhaber: Agfa-Gevaert AG, 51373 Leverkusen (DE)
(72) Erfinder: Neudecker, Karl, Dipl.-Ing., D-8000 München 90 (DE); Reuter, Hans-Joachim, Dipl.-Ing., D-8056 Neufahrn (DE); Schmidt, Manfred, Dipl.-Ing., D-8011 Kirchheim (DE); Zanner, Johann, D-8025 Unterhaching (DE)

(56) Entgegenhaltungen:
- EP-A- 0 104 419
- EP-A- 0 250 851
- DE-A- 2 349 587
- DE-C- 3 610 659
- DE-U- 8 534 241
- GB-A- 2 100 881

## Beschreibung

Die Erfindung betrifft ein Blattfilmvorratsmagasin.

Durch die DE-C-36 10 659, DE-GMS 85 34 241 und DE-PS 31 22 582 sind Vorratsmagazine bekannt, die einen Behälter in der Form eines flachen Quaders aufweisen, der an seiner der Röntgenblattfilmstapel-Oberseite zugewandten Flachseite eine über die Vorratsmagazinbreite und die halbe Vorratsmagazinlänge reichende Öffnung aufweist. Diese Öffnung ist mittels eines als Schieberohr ausgebildeten Deckelteils, das entlang einer Vorratsmagazinlängsseite verschiebbar ist, lichtdicht verschließbar. Über diese Öffnung ist das Vorratsmagazin mit einem Röntgenblattfilmstapel beladbar und durch sie sind einzelne Röntgenblattfilme entnehmbar.

Diese Vorratsmagazine sind aufgrund der auf die halbe Vorratsmagazinlänge begrenzten Be- und Entladeöffnung bei großen Röntgenblattfilmformaten nicht ganz einfach zu beladen. Zudem wird das Schieberohr beim Einsetzen des Vorratsmagazins in eine dafür vorgesehene Einrichtung zum Be- und Entladen von Röntgenblattfilmkassetten zurückgeschoben, so daß der Röntgenblattfilmstapel im Innern der Einrichtung offen liegt, was dazu führt, daß bei Wartungsarbeiten ein Verlust von Röntgenblattfilm durch zufälliges Belichten nicht auszuschließen ist. Zudem haben diese und andere auf dem Markt erhältliche Vorratsmagazine den Nachteil, daß die Anzahl der in einer Einrichtung zum Be- und Entladen von Röntgenblattfilmkassetten unterbringbaren Vorratsmagazine dadurch begrenzt ist, daß die Entnahmeöffnung innerhalb der Grundfläche des Vorratsmagazins liegt und zwischen den Magazinen Raum für Mittel zur Entnahme von Röntgenblattfilmen vorhanden sein muß.

In der EPA 80107115.0/0052159 ist eine Einrichtung zum Be- und Entladen von Röntgenblattfilmkassetten beschrieben, bei der der Abstand zwischen schubladenartigen Röntgenblattfilmmagazinen nur durch einen den Deckelteil der Behälter arretierenden Zapfen bestimmt ist. Die Deckel dieser schubladenartigen Magazine reichen nur über die Magazinoberseite und Teile der Längsschmalseite. Diese schubladenartigen Röntgenblattfilmmagazine sind aber nicht bei Tageslicht beladbar, weil keine Vorrichtungen zum Öffnen und Abziehen der Umhüllung bei geschlossenem Magazin vorhanden sind.

DE-C-36 10 659 offenbart ein Magazin mit den im Oberbegriff des Anspruchs 1 aufgeführten Merkmalen.

Der Erfindung liegt daher die Aufgabe zugrunde, ein derartiges Vorratsmagazin so auszubilden, daß das Vorratsmagazin bei Tageslicht einfacher zu beladen ist und daß mehrere Vorratsmagazine ohne Zwischenräume für Röntgenblattfilmentnahmemittel übereinander in einer Einrichtung zum Be- und Entladen von Röntgenblattfilmkassetten anordenbar sind.

Diese Aufgabe wird erfindungsgemäß gelöst durch die Merkmale des Hauptanspruchs. Weitere vorteilhafte Merkmale sind den Unteransprüchen entnehmbar.

Das erfindungsgemäße Vorratsmagazin ermöglicht mittels des Klappdeckels ein einfaches Beladen, da nach Öffnen des Klappdeckels die Mittel zum Abziehen der Röntgenblattfilmstapelhülle frei zugänglich sind.

Eine an der Verpackungshülle des Röntgenblattfilms vorgesehene Lasche zum Abziehen der Hülle vom Stapel kann ohne zusätzliche Handgriffe mit den im Vorratsmagazin angeordneten Mitteln zum Abziehen der Hülle in Eingriff gebracht werden.

Ein weiterer Vorteil der erfindungsgemäßen Vorratsmagazine ist trotz ihrer einfachen Beladbarkeit bei Tageslicht, daß sie bzw. die sie aufnehmenden Fächer ohne Zwischenraum für Röntgenblattfilm-Entnahmemittel in der Einrichtung zur Entnahme von einzelnen Röntgenblattfilmen anordenbar sind, weil eine wegen des entsprechenden Formats benötigte Box aus dem Deckelteil nach vorn herausgezogen wird und die Blattfilmentnahmemittel außerhalb der Magazine im Innern der Vorrichtung von oben in die Box eingreifen können.

Die Erfindung wird anhand von Zeichnungen näher erläutert.

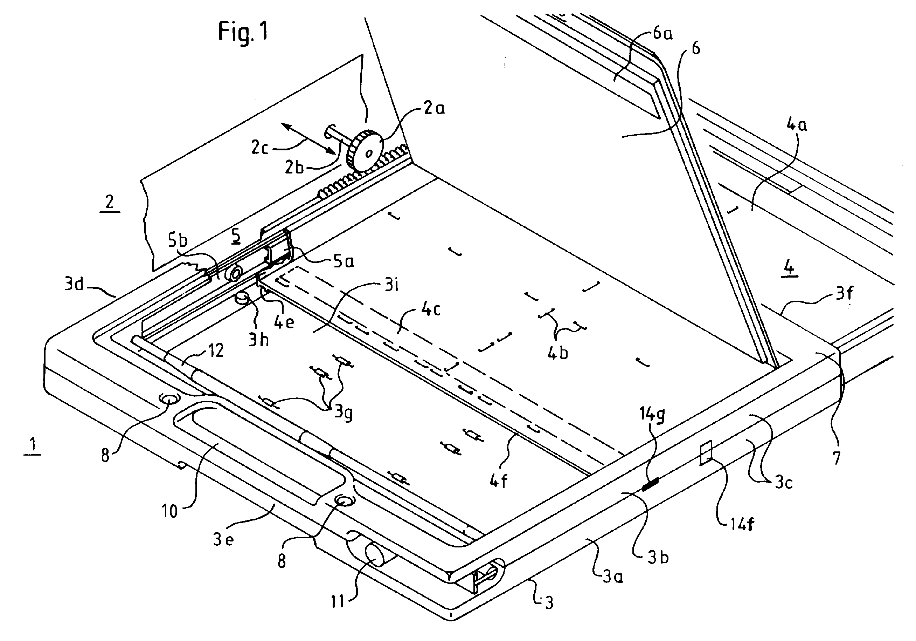

Es zeigen
- Fig. 1: eine perspektivische Darstellung einer Ausführungsform eines erfindungsgemäßen Vorratsmagazins, bei der der Klappdeckel geöffnet ist,

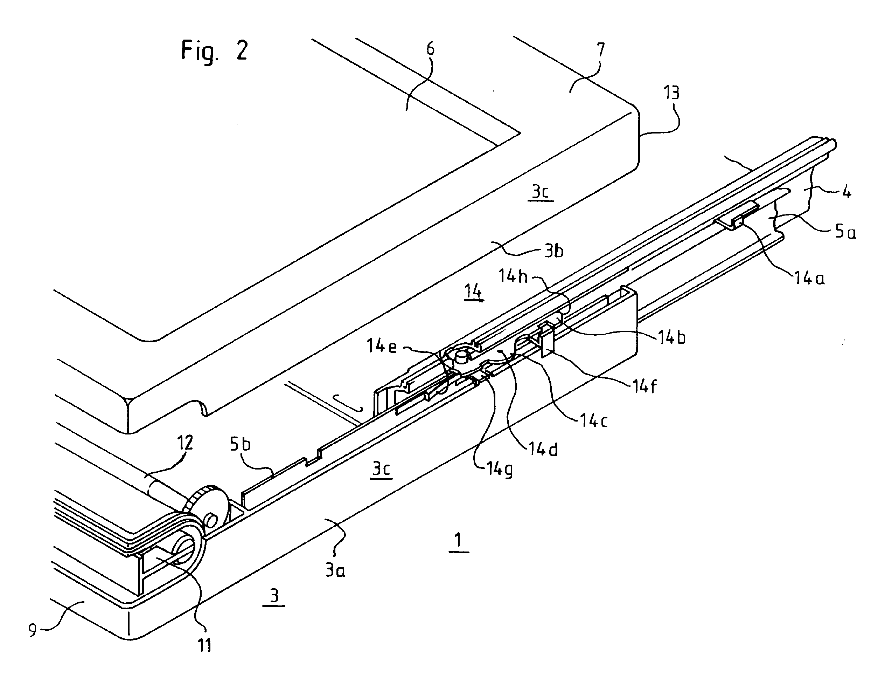

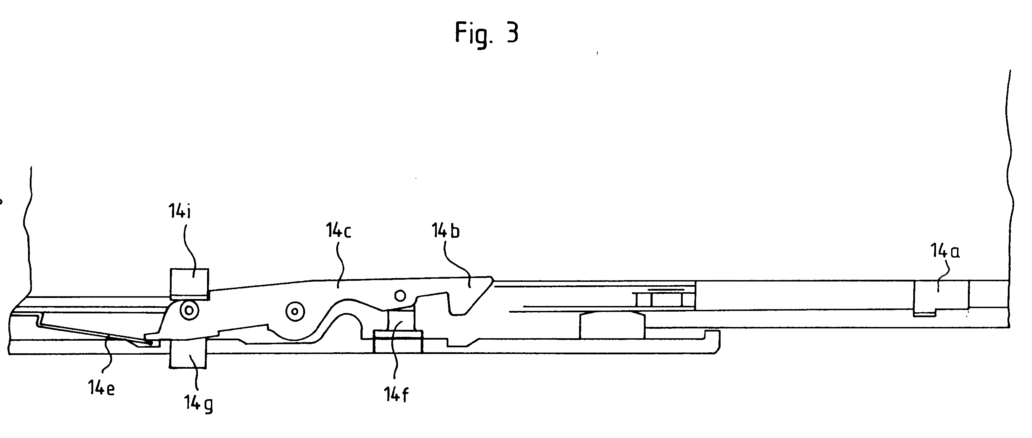

- Fig. 2: eine auseinandergezogene, perspektivische Darstellung des Vorratsmagazins nach Figur 1,
- Fig. 5: eine Ansicht eines Riegelmechanismus eines erfindungsgemäßen Vorratsmagazins.

In den Figuren ist ein Vorratsmagazin mit 1 und eine nur schematisch gezeigte Einrichtung zum Entnehmen einzelner Röntgenblattfilme mit 2 bezeichnet. Das Vorratsmagazin 1 umfaßt einen Deckelteil 3 und eine Box 4, wobei die Box 4 mittels zweier paralleler Teleskopschienen 5 in Schienenlängsrichtung beweglich im Deckelteil 3 gelagert ist. Die Box 4 weist an ihrer Oberseite 4a eine über im wesentlichen ihre ganze Fläche reichende Öffnung auf. Des weiteren umfaßt das Vorratsmagazin 1 einen Klappdeckel 6. Der Klappdeckel ist an einer der Oberseite 4a der Box 4 zugewandten Flachseite 7 des Vorratsmagazins 1 angeordnet und mittels einer Verriegelung 8 lichtdicht mit dem Deckelteil 3 verriegelbar. Das Deckelteil 3 umfaßt eine untere Halbschale 3a und eine obere Halbschale 3b. An der rückwärtigen Schmalseite 3e des Deckelteils 3 ist ein Griff 10 angeformt und eine ausklappbare Kurbel 11 versenkt angeordnet.

Mittels der Kurbel 11 ist eine parallel zur rückwärtigen Schmalseite 3e angeordnete Welle 12 über ein bekanntes Zahnradgetriebe mit einem Übersetzungsverhältnis größer 1 antreibbar. Die Teleskopschienen 5 sind in je einer der beiden senkrecht zur rückwärtigen Schmalseite 3e verlaufenden Schmalseiten 3c, 3d angeordnet. Eine der rückwärtigen Schmalseite 3e gegenüberliegende und dazu parallele vordere Schmalseite 3f des Deckelteils 3 ist offen. Durch diese offene vordere Schmalseite 3f ist die Box 4, geführt von den Teleskopschienen 5, in das und aus dem Deckelteil 3 schiebbar. Ist die Box 4 eingeschoben und der Klappdeckel 6 geschlossen, ist ein im Vorratsmagazin 1 befindlicher Röntgenblattfilmstapel lichtdicht abgeschlossen.

Die Box 4 und das Deckelteil 3 sind im geschlossenen Zustand des Vorratsmagazins 1 mittels eines Riegelmechanismus 14 miteinander verriegelt. Der Riegelmechanismus 14 umfaßt eine mit einem an der Box 4 befestigten Teil 5a der Teleskopschiene 5 fest verbundene Nase 14a. Im geschlossenen Zustand des Vorratsmagazins 1 steht die Nase 14a mit einer Sperrklinke 14b eines Riegels 14c in Eingriff. Der Riegel 14c ist drehbar auf einer Achse 14d gelagert und wird mittels einer Feder 14e in einer Verriegelungsposition gehalten. Die Achse 14d ist mit dem äußeren, am Deckelteil 4 befestigten Teil 5b der Teleskopschiene fest verbunden.

An den Riegel 14c ist ein Entriegelungshebel 14f angelenkt. Das freie Ende des Entriegelungshebels 14f ist flächig ausgeformt und bündig mit der jeweiligen Schmalseite 3c bzw. 3d im Deckelteil 3 gelagert. Zur Entriegelung der Box 4 des Vorratsmagazins 1 sind in der Einrichtung 2 zum Entnehmen einzelner Röntgenblattfilme Mittel vorgesehen, die den Entriegelungshebel 14f gegen die Kraft der Feder 14e in das Innere des Vorratsmagazins 1 drücken.

Wenn die nicht gezeigten Mittel zur Entriegelung der Box 4 den Entriegelungshebel 14f in das Innere des Vorratsmagazins 1 drücken, wobei die Sperrklinke 14b die Nase 14a freigibt, wird eine Verriegelungsklinke 14g, die auch am Riegel 14c angelenkt ist, aus den jeweiligen Schmalseiten 3c bzw. 3d herausgeschoben.

Handhabung und Funktion des erfindungsgemäßen Vorratsmagazins 1 im Zusammenwirken mit der nur angedeuteten Einrichtung 2 zum Entnehmen einzelner Röntgenblattfilme sind, ausgehend von einem leeren, verschlossenen Vorratsmagazin folgende:

Die Bedienperson betätigt die Verriegelung 8 und öffnet den Klappdeckel 6. Sie legt einen lichtdicht umhüllten Röntgenblattfilmstapel ein. Die Umhüllung des Röntgenblattfilmstapels ist dabei ähnlich der in der DE-GMS 85 34 241 gezeigten Umhüllung ausgebildet, die auch eine Lasche zum Abziehen der Hülle aufweist. Damit verschiedene Formate von Röntgenblattfilmstapeln in das Vorratsmagazin 1 einlegbar sind, sind in der Box 4 Schlitze 4b vorgesehen, in die nicht gezeigte Abgrenzungsstücke einsteckbar sind, die den Röntgenblattfilmstapel je nach Format in einer bestimmten Position halten. Nach dem Einlegen des Röntgenblattfilmstapels befestigt die Bedienperson die Abzugslasche der Umhüllung an der Welle 12. Das kann auf irgend eine bekannte Art, z.B. mittels Klettbändern erfolgen. Das Einlegen des Röntgenblattfilmstapels und das Befestigen der Abzugslasche ist bei dem erfindungsgemäßen Vorratsmagazin 1 ein einfacher Vorgang, bei dem kein Außengehäuseteil außer dem Klappdeckel 6 bewegt werden muß.

Nachdem der Röntgenblattfilmstapel eingelegt und die Abzugslasche der nicht gezeigten Hülle an der Welle 12 befestigt ist, schließt die Bedienperson den Klappdeckel 6, wobei ein Röntgenblattfilmstapel-Rückhaltestück 4c der Box 4 und ein Rückhaltestück 6a des Klappdeckels 6 derart übereinander zu liegen kommen, daß sie einen Hüllenabzugskanal bilden. Die Umhüllung wird nun durch Abreißen einer Sicherheitslasche bei geschlossenem Vorratsmagazin, ähnlich wie bei der in der DE-GMS 85 34 241 gezeigten Umhüllung, auf das Abziehen der Umhüllung vorbereitet. Als nächstes klappt die Bedienperson die Kurbel 11 aus der rückwärtigen Schmalseite 3e aus. Mittels der Kurbel 11 ist die Welle 12 derart antreibbar, daß die Röntgenblattfilmstapelhülle auf ihr aufgewickelt und vom Stapel durch den Hüllenabzugskanal hindurch abziehbar ist. Die Bedienperson kurbelt solange, bis die Hülle vollständig vom Stapel abgezogen ist. Dann wird die Kurbel 11 eingeklappt.

Das so vorbereitete Vorratsmagazin 1 kann nun in eine nicht gezeigte Einrichtung 2 zur Entnahme einzelner Röntgenblattfilme eingeschoben werden.

Wenn das Vorratsmagazin 1 in einen Vorratsmagazin-Aufnahmeschacht dieser Einrichtung vollständig eingeschoben ist, werden die Entriegelungshebel 14f durch Mittel zur Entriegelung der Box 4 in das Vorratsmagazin 1 hineingedrückt. Somit ist die Box 4 entriegelt und das Vorratsmagazin 1 gegen Herausziehen aus der Einrichtung 2 gesichert. Soll die Bedienperson das Vorratsmagazin 1 entnehmen, so muß sie an der Einrichtung 2 zur Entnahme von einzelnen Röntgenblattfilmen eine Taste drücken, worauf eine Kontrollvorrichtung je einen Hubmagneten bestromt, der die Mittel zur Entriegelung der Box 4 in eine Position bewegt, in der das Vorratsmagazin 1 bei geschlossener Box 4 entnommen werden kann. Soll nun ein Röntgenblattfilm entnommen werden, steuert die Kontrollvorrichtung, wie sie z.B. in der DE-PS 36 10 660 beschrieben ist, Mittel zum Bewegen eines Kraftübertragungselements 2a an, das auf einer Antriebswelle 2b angeordnet ist. Antriebswelle 2b und Antriebselement 2a können in Richtung 2c hin- und herbewegt werden. Die Antriebswelle 2b und das Antriebselement 2a werden in Richtung 2c auf das Vorratsmagazin 1 zu bewegt, bis das Antriebselement 2a mit einem fest an der Box 4 angeordneten Kraftübertragungselement 4d in Eingriff steht. Das Kraftübertragungselement kann hierbei eine Zahnstange oder eine Reibfläche sein und entsprechend das Antriebselement ein Zahnrad oder ein Reibrad. Es können aber auch andere geeignete Kombinationen von Antriebselement und Kraftübertragungselement eingesetzt werden.

Stehen Kraftübertragungselement 4d und Antriebselement 2a in Eingriff, so kann die Box 4 mittels des sich in eine entsprechende Richtung drehenden Antriebselements 2a aus- und eingeschoben werden. Die Kontrollvorrichtung der Einrichtung 2 zur Entnahme von einzelnen Röntgenblattfilmen steuert die Einrichtung derart, daß bei der Entnahme eines einzelnen Röntgenblattfilms zunächst die Box 4 ausgeschoben wird. In diesem Zustand darf das Vorratsmagazin 1 weder aufgrund einer Fehlbedienung noch aufgrund einer Steuerung entnehmbar sein. Diese Funktion wird dadurch erreicht, daß bei gedrücktem Entriegelungshebel 14f der Riegel 14c bei geöffneter Box 4 mittels eines Anschlags 16 arretiert wird. Tritt nun im geöffneten Zustand der Box 4 eine Störung oder ein Bedienfehler auf, der dazu führt, daß die Mittel zur Entriegelung der Box 4 den Entriegelungshebel 14f und damit das Vorratsmagazin 1 zur Entnahme frei geben, bleibt der Riegel 14c in seiner ursprünglichen Lage und die Verriegelungsklinke 14g verhindert die Entnahme des Vorratsmagazins 1. Die Entnahme des Vorratsmagazins 1 ist somit erst möglich, wenn der Riegel 14c in seine das Vorratsmagazin 1 verriegelnde Stellung zurückkann, was wiederum nur bei geschlossener Box 4 möglich ist. Die Box 4 kann aber auch bei Bedarf außerhalb der Einrichtung 2 von Hand geöffnet werden. Dazu drückt die Bedienperson die Entriegelungshebel 14c und läßt bei geneigten Vorratsmagazinen die Box 4 herausrollen. Um das Vorratsmagazin 1 zu verschließen, schiebt die Bedienperson die Box 4 in den Deckelteil 3 wieder zurück, wobei die Nase 14a mittels einer schräg zu ihrer Bewegungsrichtung verlaufenden Kante 14c den Riegel 14c zurückdrückt und bei geschlossener Box 4 mit der Sperrklinke 14b verrastet.

Nach dem Öffnen der Box 4 innerhalb der Einrichtung zum Entnehmen einzelner Röntgenblattfilme entnimmt die Einrichtung 2 mit geeigneten Mitteln einen Blattfilm und schiebt im Anschluß daran die Box 4 wieder ein. Damit das Ein- und Ausschieben der Box 4 klemmfrei erfolgt, sind unter der Box 4 in der unteren Halbschale 3a drehbar gelagerte Walzen 3g angeordnet. Des weiteren ist je eine Reihe von Gleitzapfen 3h vorgesehen, die in je einer parallelen Linie zu je einer Teleskopschiene 5 fest in der unteren Halbschale 3a angeordnet sind. Diese Gleitzapfen ragen in eine Nut 4e. Je eine Nut 4e verläuft an der Unterseite der Box 4 im Anschluß an die zu den Teleskopschienen 5 parallelen Kanten der Box 4. Mittels der Nuten 4e und der Zapfen 3h wird ein Verkanten der Box 4 beim Ein- und Ausschieben verhindert.

## Patentansprüche

1. Vorratsmagazin (1) mit einer schubladenartigen, oben offenen Box (4) zum Einlegen eines Blattfilmstapels und zum Entnehmen der einzelnen Blattfilme mit einem relativ zur Box beweglichen Deckelteil (3), welches die Form eines an seiner vorderen Schmalseite offenen, flachen Quaders aufweist, in das und aus dem die an einer Oberseite offene Box schiebbar ist, wobei das Deckelteil und die Box bei eingeschobener Box mittels eines Riegelmechanismus (14) verriegelbar sind, dadurch gekennzeichnet, daß das Deckelteil (3) an einer der Oberseite (4a) der Box (4) entsprechenden Flachseite (7) einen verriegelbaren, aufklappbaren Klappdeckel (6) aufweist, so daß bei in das Deckelteil (3) eingeschobener Box (4) durch den Klappdeckel (6) ein Blattfilmstapel in die Box (4) einlegbar ist.

2. Vorratsmagazin nach Anspruch 1, dadurch gekennzeichnet, daß hinter der der Entnahme für die einzelnen Blattfilme dienenden Vorderseite (3f) gegenüberliegenden Rückseite (3e) der Box (4) Mittel angeordnet sind, vorzugsweise eine Aufwickelwalze (12), mit denen eine lichtdichte Umhüllung des Blattfilmstapels bei geschlossenem Magazin (1) vom Blattfilmstapel entfernbar, insbesondere aufwickelbar ist.

3. Vorratsmagazin nach Anspruch 1 oder 2, dadurch gekennzeichnet,
- daß der je in einer Schmalseite (3c, 3d) angeordnete Riegelmechanismus (14) einen Riegel (14c) mit einer Sperrklinke (14b) aufweist,
- daß der Riegel (14c) um eine fest mit dem Deckelteil (3) verbundene Achse (14d) drehbar gelagert ist,
- daß eine Feder (14e) an dem Riegel (14c) derart angreift, daß der Riegel (14) in einer Stellung gehalten wird, in der bei eingeschobener Box (4) die Sperrklinke (14b) mit einer fest mit der Box (4) verbundenen Nase (14a) in Eingriff steht,
- daß zwischen Sperrklinke (14b) und Achse (14d) ein Entriegelungshebel (14f) am Riegel (14c) angelenkt ist, der bündig mit den jeweiligen Schmalseiten (3c, 3d) abschließt und
- daß zwischen der Achse (14d) und dem mit der Federkraft beaufschlagten Ende des Riegels (14c) eine Verriegelungsklinke (14g) angelenkt ist.

4. Vorratsmagazin nach Anspruch 3, dadurch gekennzeichnet, daß bei betätigtem Entriegelungshebel (14f) und aus dem Deckelteil (3) ausgeschobener Box (4) ein fest mit der Box (4) verbundener Anschlag (14i) derart hinter dem Riegel (14c) liegt, daß der Riegel (14c) in einer Stellung arretiert ist, in der die Verriegelungsklinke (14g) aus der jeweiligen Schmalseite (3c, 3d) herausragt.

5. Vorratsmagazin nach einem der vorhergehenden Ansprüche, dadurch gekennzeichnet, daß Box (4) und Deckelteil (3) innerhalb einer Vorrichtung (2) zur Entnahme von einzelnen Röntgenblattfilmen mittels des Riegelmechanismus (14) entriegelbar sind und daß die Box (4) mittels eines fest mit der Box (4) verbundenen Kraftübertragsungselements (4d) relativ zum Deckelteil (3) aus- und einschiebbar ist.

6. Vorratsmagazin nach Anspruch 5, dadurch gekennzeichnet, daß das Kraftübertragungselement (4d) eine ebene Reibfläche oder eine Zahnstange ist.

7. Vorratsmagazin nach einem der vorhergehenden Ansprüche, dadurch gekennzeichnet, daß an der Unterseite der Box (4) an den parallel zu den jeweiligen Schmalseiten (3d, 3d) des Deckelteils (3) verlaufenden Kanten je eine Nut (4e) vorgesehen ist, in die eine Vielzahl von an einer Flachseite (3i) der unteren Halbschale (3a) befestigten Gleitzapfen (3h) eingreifen und daß in der Flachseite (3i) eine Vielzahl von Walzen (3g) angeordnet ist.

## Claims

1. Storage magazine (1) having a drawer-like box (4), which is open at the upper side, for inserting a sheet film stack and for removing the individual sheet films with a cover part (3) which is movable relative to the box and which has the shape of a flat cuboid which is open at its front narrow side, into which and out of which the box, which is open at an upper side, can be slid, it being possible to lock the cover part and the box by means of a locking bar mechanism (14) when the box is slid in, characterized in that the cover part (3) comprises on a flat side (7) corresponding to the upper part (4a) of the box (4) a hinged lid (6) which can be locked and lifted open such that, when the box (4) is slid into the cover part (3), a sheet film stack can be inserted into the box (4) through the hinged cover (6).

2. Storage magazine according to Claim 1, characterized in that means, preferably a wind-up roller (12), are disposed behind the rear side (3e) of the box (4) lying opposite the front side (3f) used for the removal of the individual sheet films, by which means a light-tight envelope of the sheet film stack can be removed, in particular wound up, from the sheet film stack when the magazine (1) is closed.

3. Storage magazine according to Claim 1 or 2, characterized in that:
- each locking bar mechanism (14) disposed in the narrow sides (3c, 3d) comprises a locking bar (14c) with a locking pawl (14b);
- the locking bar (14c) is mounted so as to rotate about a shaft (14d) rigidly connected to the cover part (3);
- a spring (14e) acts on the locking bar (14c) in such a way that the locking bar (14) is held in a position in which the locking pawl (14b) engages with a projection (14a) rigidly connected to the box (4) when the latter is slid in;
- an unlocking lever (14f) is articulated on the locking bar (14c) between the locking pawl (14b) and the shaft (14d) and terminates flush with the respective narrow side (3c, 3d); and
- a locking pawl (14g) is articulated between the shaft (14d) and the end of the locking bar (14c) upon which the spring force acts.

4. Storage magazine according to Claim 3, characterized in that when the unlocking lever (14f) is actuated and the box (4) is slid out of the cover part (3) a stop (14i) which is rigidly connected to the box (4) lies behind the locking bar (14c) in such a way that the locking bar (14c) is locked in a position in which the locking pawl (14g) projects out of the respective narrow side (3c, 3d).

5. Storage magazine according to any one of the preceding claims, characterized in that the box (4) and cover part (3) can be unlocked inside a device (2) for the removal of individual X-ray sheet films by means of the locking bar mechanism (14); and in that the box (4) can be slid out and in relative to the cover part (3) by means of a force-transmission component (4d) which is rigidly connected to the box (4).

6. Storage magazine according to Claim 5, characterized in that the force-transmission component (4d) is a flat friction surface or a toothed rack.

7. Storage magazine according to any one of the preceding claims, characterized in that a groove (4e) is provided in each case on the underside of the box (4) on the edges extending parallel to the respective narrow sides (3c, 3d) of the cover part (3), in which grooves a plurality of sliding pins (3h), which are secured on a flat side (3i) of the lower half shell (3a) engage; and in that a plurality of rollers (3g) are disposed in the flat side (3i).

## Revendications

1. Magasin de stockage (1) comportant une boîte (4) en forme de tiroir, ouverte au-dessus en vue de l'introduction d'une pile de pellicules en feuilles et de l'extraction des pellicules en feuilles individuelles, d'un couvercle (3) mobile par rapport à la boîte, qui présente la forme d'un parallélépipède plat, ouvert sur son petit côté antérieur, dans lequel et hors duquel la boîte ouverte à son côté supérieur peut être déplacée, le couvercle et la boîte lorsque celle-ci est introduite pouvant être verrouillés à l'aide d'un mécanisme de verrouillage (14), caractérisé en ce que le couvercle (3) présente sur un côté plat (7) correspondant au côté supérieur (4a) de la boîte (4), un couvercle rabattable, verrouillable (6), de sorte que dans le cas où la boîte (4) est introduite dans le couvercle (3) une pile de pellicules peut être introduite dans la boîte (4) par l'intermédiaire du couvercle rabattable (6).

2. Magasin de stockage selon la revendication 1, caractérisé en ce que derrière le côté postérieur (3e) de la boîte (4) en vis-à-vis du côté antérieur (3f) servant à l'extraction pour les pellicules en feuilles individuelles, des moyens sont disposés, de préférence un rouleau d'enroulement (12), à l'aide desquels une enveloppe opaque à la lumière de la pile de pellicules peut être retirée, en particulier enroulée de la pile de pellicules, le magasin (1) étant fermé.

3. Magasin de stockage selon la revendication 1 ou 2, caractérisé en ce que
- le mécanisme de verrouillage (14) disposé chacun dans un petit côté (3c, 3d) présente un verrou (14c) avec un cliquet d'arrêt (14b),
- en ce que le verrou (14c) est disposé à rotation autour d'un axe (14d) solidaire du couvercle (3),
- en ce qu'un ressort (14e) agit sur le verrou (14c) de telle sorte que le verrou (14c) est maintenu dans une position, dans laquelle la boîte (4) étant introduite, le cliquet d'arrêt (14b) se trouve en prise avec un talon (14a) solidaire de la boîte (4),
- en ce qu'entre le cliquet d'arrêt (14b) et l'axe (14d) est articulé un levier de déverrouillage (14f) sur le verrou (14c), qui se termine de niveau avec les petits côtés respectifs (3c, 3d), et
- en ce qu'entre l'axe (14d) et l'extrémité sollicitée par la force du ressort du verrou (14c) est articulé un cliquet de verrouillage (14g).

4. Magasin de stockage selon la revendication 3, caractérisé en ce que, lors de la manoeuvre du levier de déverrouillage (14f) et de l'extraction de la boîte (4) du couvercle (3), une butée (14i) solidaire de la boîte (4) se trouve derrière le verrou (14c), de telle sorte que le verrou (14c) est bloqué dans une position dans laquelle le cliquet de verrouillage (14g) fait saillie hors du petit côté respectif (3c, 3d).

5. Magasin de stockage selon l'une quelconque des revendications précédentes, caractérisé en ce que la boîte (4) et le couvercle (3) à l'intérieur d'un dispositif (2) d'extraction de pellicules radiographiques individuelles peuvent être déverrouillées à l'aide du mécanisme de verrouillage (14) et en ce que la boîte (4) peut être extraite et introduite par rapport au couvercle (3) au moyen d'un élément de transmission de force (4d) solidaire de la boîte (4).

6. Magasin de stockage selon la revendication 5, caractérisé en ce que l'élément de transmission de force (4d) est une surface de friction plane ou une crémaillère.

7. Magasin de stockage selon l'une quelconque des revendications précédentes, caractérisé en ce que, sur le côté inférieur de la boîte (4), sur les bords s'étendant parallèlement aux petits côtés respectifs (3c, 3d), du couvercle (3), est prévue une rainure (4e), dans laquelle pénètre une pluralité de pivots de glissement (3h) fixés à un côté plat (3i) de la demi-coquille inférieure (3a) et en ce que dans le côté plat (3i) est disposée une pluralité de rouleaux (3g).
